# EUROPEAN PATENT SPECIFICATION

(11) **EP 3 101 880 B1**
(45) Date of publication and mention of the grant of the patent: **14.03.2018**
(21) Application number: 15740580.4
(22) Date of filing: 26.01.2015
(51) Int. Cl.: H04M 1/60, H04B 3/20

(54) **AUDIO SWITCH, COMMUNICATION DEVICE USING SAME, AND COMMUNICATION SYSTEM**
AUDIOSCHALTER, KOMMUNIKATIONSVORRICHTUNG DAMIT UND KOMMUNIKATIONSSYSTEM
COMMUTATEUR AUDIO, DISPOSITIF DE COMMUNICATION L'UTILISANT, ET SYSTÈME DE COMMUNICATION

(30) Priority: 27.01.2014 JP 2014012616
(43) Date of publication of application: 07.12.2016
(73) Proprietor: Panasonic Intellectual Property Management Co., Ltd., Osaka-shi, Osaka 570-6207 (JP)
(72) Inventor: TAKI, Hidenori, Osaka 540-6207 (JP); FUKUSHIMA, Minoru, Osaka 540-6207 (JP); WASHI, Teppei, Osaka 540-6207 (JP)
(74) Representative: Appelt, Christian W.
(86) International application number: PCT/JP2015/000308
(87) International publication number: WO 2015/111415

(56) References cited:
- JP-A- H0 262 151
- JP-A- H0 556 132
- JP-A- S62 135 022
- JP-A- 2007 110 527
- JP-A- 2008 054 253
- JP-A- 2009 105 666
- US-A- 5 940 499
- HIDEAKI KURIHARA ET AL.: 'Keitai Denwa no Onkyo Gijutsu' THE JOURNAL OF THE ACOUSTICAL SOCIETY OF JAPAN vol. 58, no. 12, 01 December 2002, pages 786 - 791, XP008181681

## Description

### Technical Field

The invention relates to a voice switch, a communication device with the same, and a communication system including the communication device with the voice switch.

### Background Art

A voice switch system as a related technology is exemplified in JP 2002-64618 A. This related technology is configured to detect voice from each of outgoing and incoming signals to attenuate a signal on a side from which no voice is detected, thereby dynamically switching a transmission direction.

However, when any one of the outgoing and the incoming signals has an S/N ratio considerably lower than that of the other, a voice switch thereof may be fixed to a higher S/N ratio side (e.g., a reception side), which causes a phenomenon (hereinafter referred to as an "inhibition phenomenon") that the voice switch is hard to change to a lower S/N ratio side (e.g., a transmission side). The voice switch being hard to change like that may cause a problem that a party can hear the incoming voice but the opposite party cannot hear the outgoing voice.

US 5,940,499 A shows a voice switch in a hands-free communications system performs selective attenuation with respect to respective voice signals being transmitted and received in respective transmitting and receiving paths, the transmitted voice signal having been converted from an audible voice by a microphone connected to the transmitting path and the received voice signal having been converted by a loudspeaker to an audible voice output. A detector selectively detects a currently transmitted voice signal at a normal level, a currently received voice signal at a normal level, and drops in the respective levels thereof to nil levels and provides corresponding outputs to a controller. When one of the transmitted and received voice signals is of a normal level and the detector newly detects the other thereof at a normal level, the controller selectively attenuates that other, newly-detected normal level voice signal. Further, when a current voice signal of a normal level drops to a nil level and, within a selected time interval, resumes its normal level and also the other voice signal is newly detected at a normal level, the controller preferentially attenuates the newly detected voice signal such that the resumed normal level voice signal is preferentially processed.

JP 2009-105666 A relates to a loudspeaker call device that has a speech speed converting part between the voice switch and a second echo canceler. Consequently, a reception speech signal whose speech speed has been adjusted by the speech speed converting part is input to the voice switch and a first echo canceler, to thereby prevent a change in the speech speed of the reception speech signal from having influence on the suppression processing of echo and howling. As a result, it is possible to adjust the speech speed, while making the voice switch normally operate, without reducing the echo suppression amount by the first echo canceler.

### Summary of Invention

The present invention has been achieved in view of the above circumstances, and an object thereof is to enable two-way communication by suppressing the occurrence of the inhibition phenomenon even when any one of outgoing and incoming signals has an S/N ratio considerably lower than that of the other.

An voice switch of the invention includes a first signal path configured so that a first transmission signal for the transmission of a voice signal is transmitted on, and a second signal path configured so that a second transmission signal for the transmission of another voice signal different from the voice signal is transmitted on in an opposite direction to the first signal path. The voice switch of the invention also includes a first loss generator configured to insert a loss into the first signal path, and a second loss generator configured to insert a loss into the second signal path. The voice switch of the invention also includes a voice section detector configured to detect voice sections containing the voice signal in the first transmission signal, and a loss controller configured to adjust a first loss amount to be inserted into the first signal path through the first loss generator and a second loss amount to be inserted into the second signal path through the second loss generator. The loss controller is configured, in the voice sections of the first transmission signal, to increase and decrease the second and first loss amounts, respectively, thereby allowing the first transmission signal to be transmitted. The loss controller is also configured, in a non-voice sections of the first transmission signal not containing the voice signal, to increase and decrease the first and second loss amounts, respectively, thereby allowing the second transmission signal to be transmitted. The voice section detector detects the voice sections based on the amplitude values of the first transmission signal. Alternatively, the voice section detector detects the voice sections based on the amplitude values by comparing a signal component of which correlation with the voice signal in the first transmission signal is relatively high and a signal component of which correlation with the voice signal is relatively low.

The present invention has the advantage of enabling two-way communication by suppressing the occurrence of the inhibition phenomenon even when any one of outgoing and incoming signals has an S/N ratio considerably lower than that of the other.

### Brief Description of Drawings

The figures depict one or more implementations in accordance with the present teaching, by way of example only, not by way of limitations. In the figure, like reference numerals refer to the same or similar elements where:
FIG. 1 is a block diagram of a voice switch in accordance with Embodiment 1 of the invention;
FIG. 2 illustrates an operation of a voice section detector in the embodiment;
FIG. 3 illustrates an operation of a voice section detector in the embodiment;
FIGS. 4A and 4B illustrate operations of a loss controller in the embodiment;
FIG. 5 is a block diagram of a voice switch in accordance with Embodiment 2 of the invention;
FIG. 6 is a block diagram of a voice switch in accordance with Embodiment 3 of the invention;
FIG. 7 is a block diagram showing another configuration in the embodiment;
FIG. 8 is a block diagram of a voice switch in accordance with Embodiment 4 of the invention;
FIG. 9 is a block diagram of a voice switch in accordance with Embodiment 5 of the invention;
FIG. 10 is a block diagram of a communication device and a communication system, in accordance with Embodiment 6 of the invention; and
FIG. 11 is a block diagram showing another configuration in the embodiment.

### Description of Embodiments

### (Embodiment 1)

A voice switch in accordance with Embodiment 1 of the invention will be explained in detail with reference to the drawings.

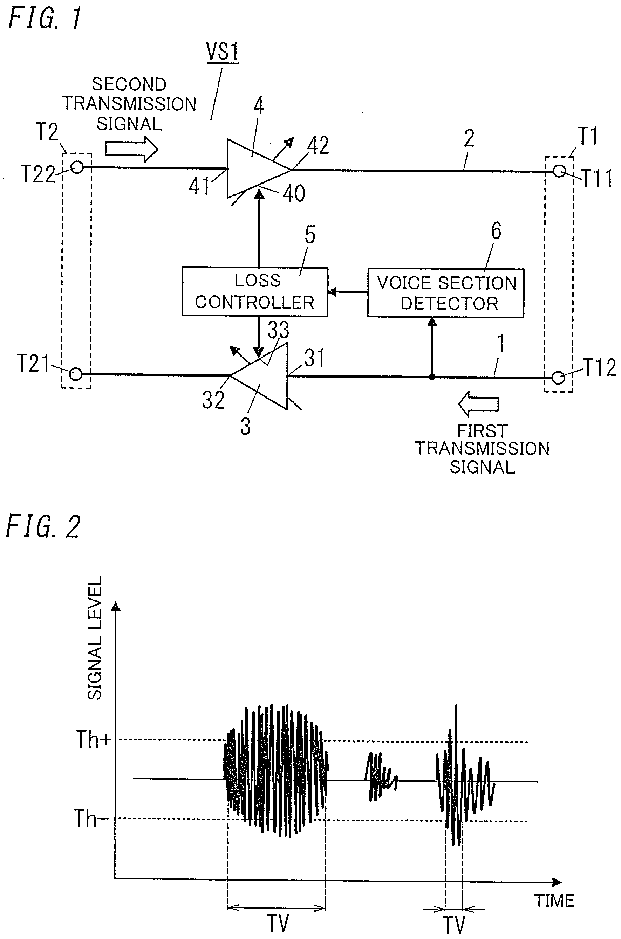

As shown in FIG. 1, the voice switch VS1 in the embodiment includes a first signal path 1, a second signal path 2, a first loss generator 3, a second loss generator 4, a loss controller 5 and a voice section detector 6.

The voice switch VS1 includes a first terminal device T1 and a second terminal device T2. The first terminal device T1 includes a first input terminal T11 and a first output terminal T12, while the second terminal device T2 includes a second input terminal T21 and a second output terminal T22. The first signal path 1 includes a signal path between the first output terminal T12 and the second input terminal T21. The second signal path 2 includes a signal path between the second output terminal T22 and the first input terminal T11. The first signal path 1 is configured so that a first transmission signal is transmitted on from a side of the first output terminal T12 to a side of the second input terminal T21. The second signal path 2 is configured so that a second transmission signal is transmitted on from a side of the second output terminal T22 to a side of the first input terminal T11. Here, when seen from a side of the first terminal device T1, the first transmission signal functions as an outgoing signal, and the second transmission signal functions as an incoming signal. Conversely, when seen from a side of the second terminal device T2, the first transmission signal functions as an incoming signal, and the second transmission signal functions as an outgoing signal. It is noted that the first transmission signal will contain a voice signal obtained by converting voice of a party on the side of the first terminal device T1 into an electric signal and/or a noise signal obtained by converting a sound (a background noise) exclusive of the voice on the side of the first terminal device T1 into an electric signal. Similarly, it is noted that the second transmission signal will contain a voice signal obtained by converting voice of a party on the side of the second terminal device T2 into an electric signal and/or a noise signal obtained by converting a sound (a background noise) exclusive of the voice on the side of the second terminal device T2 into an electric signal. In the explanation below, a voice section and a non-voice section mean a section containing a voice signal and a section containing no voice signal, respectively, in each of time periods when the first and second transmission signals are transmitted.

The first loss generator 3 includes a control terminal 33 electrically connected with the loss controller 5, an input terminal 31 electrically connected with the first output terminal T12, and an output terminal 32 electrically connected with the second input terminal T21. The first loss generator 3 is configured to insert a variable loss into the first signal path 1. In the example of FIG. 1, the first loss generator 3 is configured to vary a loss to be inserted into the first signal path 1 in accordance with control (a control signal) of the loss controller 5. The second loss generator 4 includes a control terminal 40 electrically connected with the loss controller 5, an input terminal 41 electrically connected with the second output terminal T22, and an output terminal 42 electrically connected with the first input terminal T11. The second loss generator 4 is configured to insert a variable loss into the second signal path 2. In the example of FIG. 1, the second loss generator 4 is configured to vary a loss to be inserted into the second signal path 2 in accordance with control (a control signal) of the loss controller 5. The first transmission signal is not allowed to be transmitted by being attenuated as a result of an increase in a loss amount (a first loss amount) inserted into the first signal path 1 through the first loss generator 3. Similarly, the second transmission signal is not allowed to be transmitted as a result of an increase in a loss amount (a second loss amount) inserted into the second signal path 2 through the second loss generator 4.

The loss controller 5 is configured to adjust (change) the first loss amount by the first loss generator 3 and the second loss amount by the second loss generator 4. In the example of FIG. 1, the loss controller 5 is configured to adjust (change) the first and second loss amounts in accordance with a signal from the voice section detector 6. In an example, the loss controller 5 is composed of a microcomputer (a computer) with a memory stored with a program.

The voice section detector 6 is configured to detect a voice section in the first transmission signal. In the example of FIG. 1, the voice switch has only the voice section detector 6 and is configured to detect a voice section in only the first transmission signal of the first and second transmission signals. The voice section detector 6 is configured to detect a voice section in the first transmission signal on only the signal path between the first output terminal T12 and the second input terminal T21. Specifically, the voice section detector 6 is configured to detect a voice section in the first transmission signal on only the signal path between the first output terminal T12 and the input terminal 31 of the first loss generator 3. For example, as shown in FIG. 2, the voice section detector 6 is configured to detect, as a voice section TV, a section in which the first transmission signal contains amplitude values (hereinafter referred to as "signal levels") that exceed a range between thresholds TH+ and TH-. The threshold TH+ (a first threshold) is larger than the threshold TH-(a second threshold). In the example of FIG. 2, the voice section detector 6 detects, as a voice section TV, a section in which the first transmission signal contains signal levels each of which is above the threshold TH+ or below the threshold TH-. In another example, the voice section detector 6 may be configured to detect a voice section TV by comparing a signal component of which correlation with a voice signal in the first transmission signal is relatively high and a signal component of which correlation with the voice signal is relatively low.

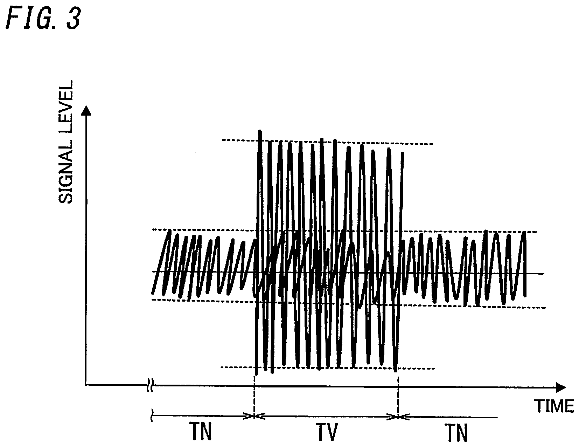

The first transmission signal may contain a voice signal and/or a noise signal. As shown in FIG. 3, a time period (a voice section) TV containing at least a voice signal is sufficiently shorter than sections TN+TV(+TN) containing only a noise signal (TN) and noise and voice signals (TV) in general. Therefore, an average of signal levels for a short time in a voice section TV becomes a relatively larger value than an average of signal levels for a long time from a time point prior to the voice section TV to the end of the short time. An average of signal levels for a short time in a non-voice section TN (e.g., a second TN in the example of FIG. 3) becomes a relatively smaller value than an average of signal levels for a long time that starts prior to the non-voice section TN and includes a voice section. That is, a short-time average in a voice section TV can be regarded as a signal component of which correlation with a corresponding voice signal is relatively high, while a long-time average from a time point prior to the voice section TV can be regarded as a signal component of which correlation with the voice signal is relatively low. The voice section detector 6 may be accordingly configured to: identify, as a voice section TV, a section in which a ratio of a short-time average to a long-time average (a ratio of voice to a background noise) is equal to or above a threshold; and identify a section, in which the ratio is below the threshold, as a non-voice section TN. For example, in the presence of only a constant noise signal, a short-time average is almost the same as a long-time average, and a ratio of the short-time average to the long-time average becomes almost 1. The threshold for identifying a voice section TV is accordingly set to a value larger than 1. In an example, the voice section detector 6 is configured to calculate first and second averages. The first average is an average of amplitude values of a first transmission signal in a first time period (e.g., several milliseconds) having a predetermined time length. The second average is an average of amplitude values of the first transmission signal in a second time period (e.g., several hundred milliseconds) that starts prior to the first time period and includes the first time period. The voice section detector 6 is also configured to determine that the first time period corresponds to a voice section TV if a ratio of the first average to the second average is equal to or above a threshold. For example, the first time period is set based on an average voice section for response in the application in which the voice switch VS1 is used. In the embodiment, the voice section detector 6 is configured to set a detection flag in a voice section to 1 and also set a detection flag in a non-voice section to 0.

In an embodiment, the first time period is repeated periodically and a next first time period begins at the close of the current first time period. In this embodiment, a second time period corresponding to the current first time period may be set to end at the close of the current first time period. In this case, it is desirable that the second time period have a time length that is twice or more as large as the first time period.

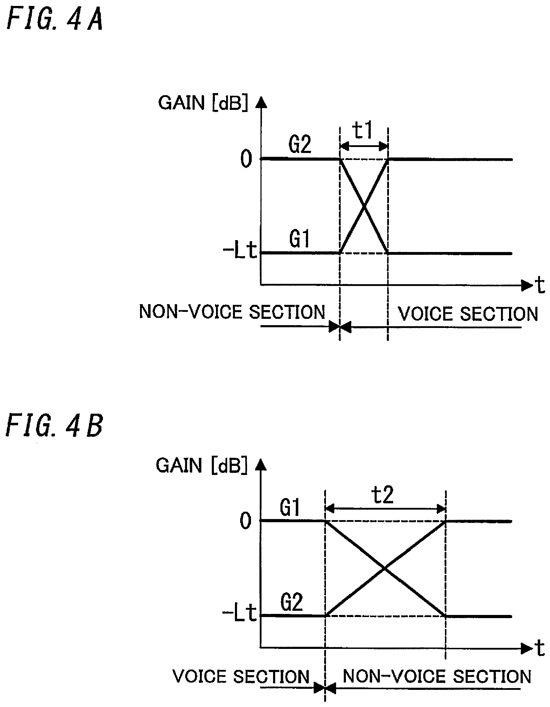

When the detection flag is 0 (the first transmission signal corresponds to a non-voice section), the loss controller 5 controls the first loss generator 3 to change the first loss amount to a maximum (a gain G1 to a minimum) and also controls the second loss generator 4 to change the second loss amount to a minimum (a gain G2 to a maximum), as shown in FIGS. 4A and 4B. In the embodiment, each minimum of the loss amounts of the first and second loss generators 3 and 4 (each maximum of the gains G1 and G2) is 0 dB, and each maximum of the loss amounts (each minimum of the gains G1 and G2) is -Lt dB.

The loss controller 5 changes the first loss amount to the maximum and also changes the second loss amount to the minimum, whereby the first transmission signal is not allowed to be transmitted as a result of being largely attenuated through the first loss generator 3, and the second transmission signal is allowed to be transmitted as a result of being hardly attenuated through the second loss generator 4.

On the other hand, when the detection flag is 1 (the first transmission signal corresponds to a voice section), the loss controller 5 controls the first loss generator 3 to change the first loss amount to a minimum (the gain G1 to a maximum) and also controls the second loss generator 4 to change the second loss amount to a maximum (the gain G2 to a minimum).

The loss controller 5 changes the first loss amount to the minimum and also changes the second loss amount to the maximum, whereby the first transmission signal is allowed to be transmitted as a result of being hardly attenuated through the first loss generator 3, and the second transmission signal is not allowed to be transmitted as a result of being largely attenuated through the second loss generator 4.

In an example, one communication device equipped with the voice switch VS1 in the embodiment is installed in an environment (hereinafter referred to as a "first environment") in which the communication device is apart from a party therein (e.g., a distance between the communication device and the party is several meters). In such a case, a conventional voice switch system has a concern that a communication device thereof may be still in a state that allows an incoming signal to be transmitted without being changed to a state that allows an outgoing signal to be transmitted because a signal level detector provided at a side of the party in the communication device may not be able to detect a voice level of the party. In such a case, as shown in FIG. 1, the voice switch VS1 in the embodiment is therefore equipped for the communication device (or another communication device) so that incoming and outgoing signals as seen from the party (the side of the second terminal device T2) are transmitted on the first and second signal paths 1 and 2, respectively. That is, the voice section detector 6 is not provided on a side of the party (the side of the second terminal device T2). The voice switch VS1 is configured so that in a non-voice section of an incoming signal (the first transmission signal) as seen from the side of the second terminal device T2, the second signal path 2 is always changed to a state that allows an outgoing signal to be transmitted on (the gain G1 and the gain G2 are changed to the minimum and the maximum, respectively). The voice switch VS1 is also configured so that in a voice section of an incoming signal as seen from the side of the second terminal device T2, the first signal path 1 is changed to a state that allows an incoming signal to be transmitted on (the gain G1 and the gain G2 are changed to the maximum and the minimum, respectively). Therefore, even when the communication device is installed in the first environment as stated above, the voice switch VS1 can prevent the communication device from being still in the state that allows the incoming signal to be transmitted.

In an example, one communication device equipped with the voice switch VS1 in the embodiment is installed in an environment (hereinafter referred to as a "second environment") showing a tendency to have an significantly high background noise level. In such a case, a conventional voice switch system has a concern that a communication device thereof may be still in a state that allows an outgoing signal to be transmitted. In the embodiment, as shown in FIG. 1, the voice switch VS1 is therefore equipped for another communication device (or the one communication device) so that outgoing and incoming signals as seen from the side of the first terminal device T1 are transmitted on the first and second signal paths 1 and 2, respectively. That is, the second terminal device T2 is provided on a side of the second environment, and the voice section detector 6 is not provided on the side of the second environment (the side of the second terminal device T2). The voice switch VS1 is configured so that in a non-voice section of an outgoing signal (the first transmission signal) as seen from the side of the first terminal device T1, the second signal path 2 is always changed to a state that allows an incoming signal to be transmitted on (the gain G1 and the gain G2 are changed to the minimum and the maximum, respectively). The voice switch VS1 is also configured so that in a voice section of the outgoing signal as seen from the side of the first terminal device T1, the first signal path 1 is changed to a state that allows an outgoing signal to be transmitted on (the gain G1 and the gain G2 are changed to the maximum and the minimum, respectively). Therefore, even when the communication device is installed in the second environment as stated above, the voice switch VS1 can prevent the communication device from being still in the state that allows the outgoing signal to be transmitted.

As stated above, the voice switch VS1 in the embodiment includes the first signal path 1 configured so that a first transmission signal for transmission of a voice signal is transmitted on, and the second signal path 2 configured so that a second transmission signal for transmission of another voice signal different from the voice signal is transmitted on in an opposite direction to the first signal path 1. The voice switch VS1 in the embodiment also includes the first loss generator 3 configured to insert a loss into the first signal path 1 and the second loss generator 4 configured to insert a loss into the second signal path 2. The voice switch VS1 in the embodiment further includes: the loss controller 5 configured to adjust (change) the first loss amount to be inserted into the first signal path 1 through the first loss generator 3 and the second loss amount to be inserted into the second signal path 2 through the second loss generator 4; and the voice section detector 6 configured to detect a voice section TV containing a voice signal in the first transmission signal.

The loss controller 5 is configured to, in the voice section TV, increase and decrease the second and first loss amounts, respectively, thereby allowing the first transmission signal to be transmitted. The loss controller 5 is also configured, in a section (a non-voice section TN) exclusive of the voice section TV, to increase and decrease the first and second loss amounts, respectively, thereby allowing the second transmission signal to be transmitted.

Since the voice switch VS1 in the embodiment is configured as stated above, even when any one of outgoing and incoming signals has an S/N ratio considerably lower than that of the other, the voice switch VS1 is installed in an appropriate orientation, thereby suppressing the occurrence of the inhibition phenomenon to enable two-way communication. The S/N ratio represents a ratio of a voice signal (level) contained in the outgoing and incoming signals to a noise signal (level) contained therein (the voice signal (level)/the noise signal (level)). That is, a transmission signal having a low S/N ratio causes difficulty in detection of a voice signal contained in the transmission signal. The voice switch VS1 is therefore installed so that it can detect only a voice section TV of a transmission signal without a lower S/N ratio to switch a transmission mode and a reception mode, thereby suppressing the occurrence of the inhibition phenomenon.

Like the voice switch VS1 in the embodiment, it is preferable that the voice section detector 6 be configured to detect a voice section TV from amplitude values (signal levels) of the first transmission signal.

Alternatively, like the voice switch VS1 in the embodiment, it is also preferable that the voice section detector 6 be configured to detect a voice section by comparing a signal component of which correlation with a voice signal in the first transmission signal is relatively high and a signal component of which correlation with the voice signal is relatively low.

Preferably, the loss controller 5 is configured to gradually increase and decrease the first and second loss amounts, respectively when changing a first transmission state that allows the first transmission signal to be transmitted to a second transmission state that allows the second transmission signal to be transmitted. Preferably, the loss controller 5 is also configured to gradually decrease and increase the first and second loss amounts, respectively when changing the second transmission state to the first transmission state. More preferably, as shown in FIGS. 4A and 4B, the loss controller 5 is configured to make a transition time t2, from the first transmission state to the second transmission state, longer than a transition time t1 from the second transmission state to the first transmission state. In FIGS. 4A and 4B, "NON-VOICE SECTION" corresponds to the second transmission state, and "VOICE SECTION" corresponds to the first transmission state.

Thus, the voice switch VS1 in the embodiment changes the second transmission state to the first transmission state for a relatively short time t1, and can thereby avoid the phenomenon that the start of a voice signal contained in the first transmission signal is largely attenuated. The voice switch VS1 in the embodiment changes the first transmission state to the second transmission state for a relatively long time t2, and can thereby avoid the phenomenon of occurrence of unwanted voice dropout as a result of large attenuation of the last part of a voice signal contained in the first transmission signal. Preferably, the transition time t1 is set to, for example 20 milliseconds or less, and the transition time t2 is set to, for example 300 milliseconds or more.

### (Embodiment 2)

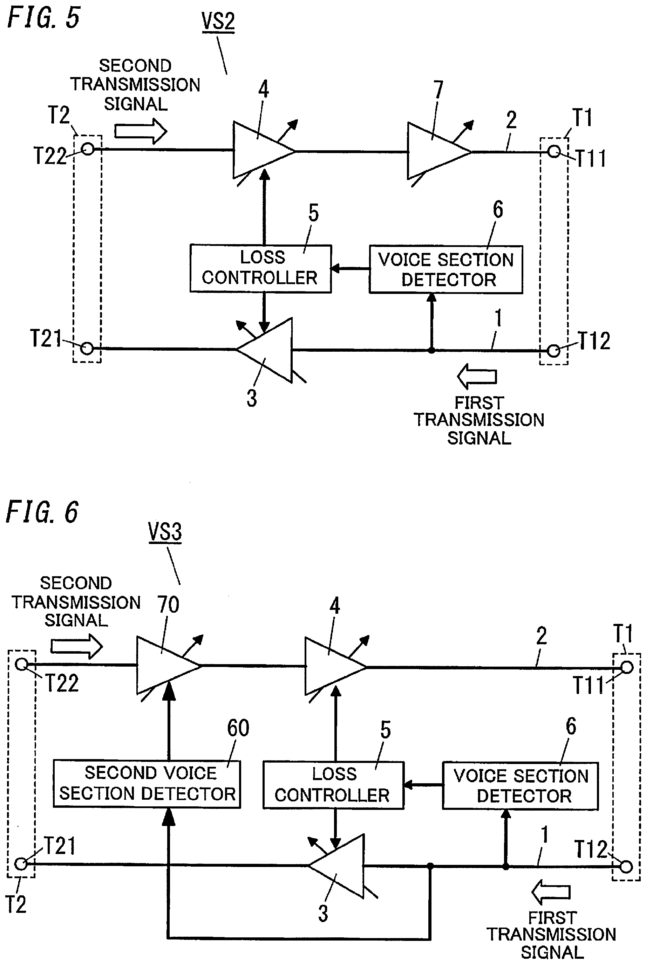

A voice switch in accordance with Embodiment 2 of the invention will be explained in detail with reference to the drawings. As shown in FIG. 5, the voice switch VS2 in the embodiment is characterized in that a gain adjuster 7 is provided at a next stage of a second loss generator 4 in a second signal path 2. That is, the gain adjuster 7 is provided between the second loss generator 4 and a first input terminal T11 of a first terminal device T1. Note that the voice switch VS2 in the embodiment has identical constituent elements to those of the voice switch VS1 in Embodiment 1 exclusive of the gain adjuster 7, and therefore the identical constituent elements have been allocated identical reference numerals and description thereof has been omitted.

The gain adjuster 7 is composed of an automatic gain control amplifier configured to vary a gain for amplifying an input signal (a second transmission signal from the second loss generator 4) in response to a level of the input signal. Such an automatic gain control amplifier is well known and therefore requires no specific explanation.

The gain adjuster 7 is configured to more increase the gain of the gain adjuster 7 as the level of the second transmission signal more decreases, and more decrease the gain as the level of the second transmission signal more increases. Therefore, the level (sound volume) of the second transmission signal from the voice switch VS2 can be kept almost constant even when the level of the second transmission signal from the second loss generator 4 fluctuates to some degree.

Thus, the voice switch VS2 in the embodiment is provided with a second gain adjuster (the gain adjuster 7) that is provided at the next stage of the second loss generator 4 in the second signal path 2 and configured to adjust the gain for amplifying the second transmission signal. The second gain adjuster (the gain adjuster 7) is configured to more increase the gain as the second transmission signal from the second loss generator 4 more decreases. The voice switch VS2 in the embodiment can therefore output the second transmission signal with an adequate level (sound volume) from the second signal path 2 regardless of the fluctuation of a level of the second transmission signal.

In case the gain adjuster 7 is provided at a previous stage of the second loss generator 4 in the second signal path 2, it is possible to avoid a decrease in the gain of the gain adjuster 7 caused by a first transmission signal in a feedback loop from a first signal path 1 to the second signal path 2.

### (Embodiment 3)

A voice switch in accordance with Embodiment 3 of the invention will be explained in detail with reference to the drawings. As shown in FIG. 6, the voice switch VS3 in the embodiment is characterized in that a second gain adjuster 70 is provided at a previous stage of a second loss generator 4 in a second signal path 2, and in that it is provided with a second voice section detector 60 configured to detect a voice section in a first transmission signal. Note that the voice switch VS3 in the embodiment has identical constituent elements to those of the voice switch VS1 in Embodiment 1 exclusive of the second gain adjuster 70 and the second voice section detector 60 and therefore the identical constituent elements have been allocated identical reference numerals and description thereof has been omitted.

The second gain adjuster 70 is composed of an automatic gain control amplifier configured to vary a gain for amplifying an input signal (a second transmission signal) in response to a level of the input signal like the gain adjuster 7. In an example of FIG. 6, the second gain adjuster 70 is provided between a second output terminal T22 of a second terminal device T2 and the second loss generator 4.

The second voice section detector 60 has the same configuration as the voice section detector 6 and is configured to detect a voice section in the first transmission signal. For example, the second voice section detector 60 is configured to set a detection flag in a voice section to 1 and also set a detection flag in a non-voice section to 0. In the example of FIG. 6, the second voice section detector 60 is configured to detect a voice section in the first transmission signal from a signal path between a first loss generator 3 and a first output terminal T12 of a first terminal device T1.

The second gain adjuster 70 is configured to, when the detection flag from the second voice section detector 60 is 0, more increase the gain of the second gain adjuster 70 as a level of the second transmission signal more decreases and more decrease the gain as the level of the second transmission signal more increases. Therefore, the level (sound volume) of the second transmission signal from the voice switch VS3 can be kept almost constant even when the level of the second transmission signal from the second loss generator 4 fluctuates to some degree.

On the other hand, when the detection flag from the second voice section detector 60 is 1, the second gain adjuster 70 fixes its own gain to a prescribed value. It is accordingly possible to avoid a decrease in the gain of the second gain adjuster 70 caused by the first transmission signal in a feedback loop from a first signal path 1 to the second signal path 2.

As stated above, the voice switch VS3 in the embodiment includes: the second gain adjuster 70 that is provided at the previous stage of the second loss generator 4 in the second signal path 2 and configured to adjust the gain for amplifying the second transmission signal; and the second voice section detector 60 configured to detect a voice section containing a voice signal in the first transmission signal. The second gain adjuster 70 is configured to more increase the gain as the second transmission signal more decreases when no voice section is detected through the second voice section detector 60. The second gain adjuster 70 is further configured to fix the gain to the prescribed value when a voice section is detected through the second voice section detector 60.

The voice switch VS3 in the embodiment is configured as described above, and can therefore avoid a decrease in the gain of the second gain adjuster 70 caused by the first transmission signal (a voice signal) in the feedback loop from the first signal path 1 to the second signal path 2. As a result, the voice switch VS3 in the embodiment can output the second transmission signal with an adequate level (sound volume) from the second signal path 2 regardless of the fluctuation of a level of the second transmission signal.

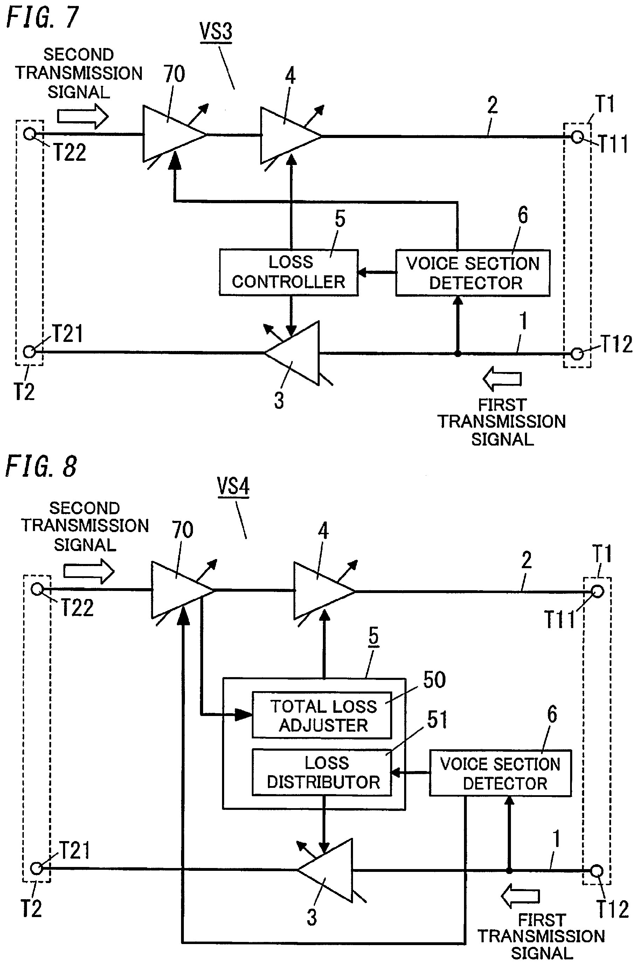

As shown in FIG. 7, the voice section detector 6 may be configured to double as the second voice section detector 60. In this case, the configuration of the voice switch VS3 can be simplified.

### (Embodiment 4)

A voice switch in accordance with Embodiment 4 of the invention will be explained in detail with reference to the drawings. As shown in FIG. 8, the voice switch VS4 in the embodiment is characterized by the configuration of a loss controller 5, and the other configuration is identical to the voice switch VS3 in Embodiment 3 (FIG. 7). Accordingly, identical constituent elements to those of Embodiment 3 have been allocated identical reference numerals, and description thereof has been omitted.

The loss controller 5 in the embodiment includes a total loss adjuster 50 and a loss distributor 51. The total loss adjuster 50 is configured to adjust a total loss amount inserted into first and second signal paths 1 and 2. That is, the total loss adjuster 50 may calculate short time averages in first and second transmission signals to figure out a value obtained by dividing the short time average in the first transmission signal by the short time average in the second transmission signal. The value (the short time average in the first transmission signal / the short time average in the second transmission signal) corresponds to a feedback gain of a (feedback) signal in a feedback loop from the first signal path 1 to the second signal path 2. The total loss adjuster 50 is to calculate the total loss amount required for obtaining a gain margin from the feedback gain to supply the total loss amount to the loss distributor 51. The total loss adjuster 50 may be configured to adjust a preset initial value according to the feedback gain when calculating the total loss amount from the feedback gain.

The loss distributor 51 is configured to distribute the total loss amount to first and second loss amounts in accordance with the total loss amount and a detection result of a voice section detector 6. That is, the loss distributor 51 is configured to: set the whole or almost the whole of the total loss amount to the first loss amount when a detection flag is 0; and set the whole or almost the whole of the total loss amount to the second loss amount when the detection flag is 1.

The total loss adjuster 50 may be further configured to more increase the total loss amount as a gain of a second gain adjuster 70 more increases. Here if the gain of the second gain adjuster 70 increases, a level of the first transmission signal in the feedback loop to the second signal path 2 increases as well. However, in the voice switch VS4 in the embodiment, since the total loss adjuster 50 more increases the total loss amount as the gain of the second gain adjuster 70 more increases, it is possible to suppress the occurrence of an echo caused by the feedback of the first transmission signal.

### (Embodiment 5)

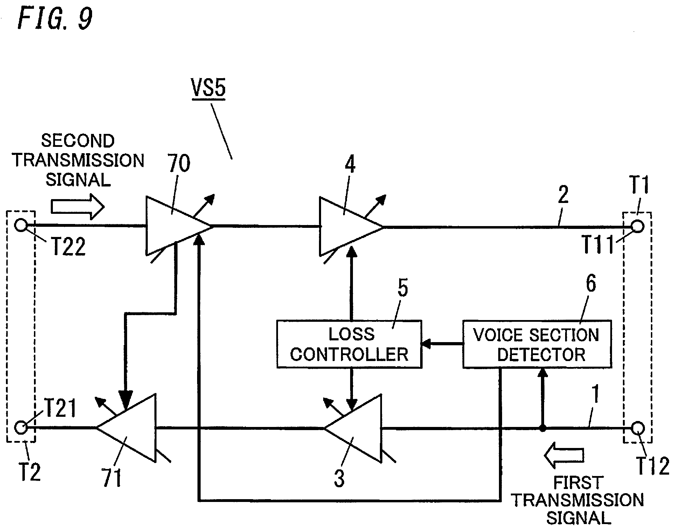

A voice switch in accordance with Embodiment 5 of the invention will be explained in detail with reference to the drawings. As shown in FIG. 9, the voice switch VS5 in the embodiment is characterized in that a first gain adjuster 71 is provided at a next stage of a first loss generator 3 in a first signal path 1. The voice switch VS5 in the embodiment has identical constituent elements to those of the voice switch VS3 (see FIG. 7) in Embodiment 3 exclusive of the first gain adjuster 71, and therefore the identical constituent elements have been allocated identical reference numerals and description thereof has been omitted.

The first gain adjuster 71 is composed of an automatic gain control amplifier configured to vary a gain for amplifying an input signal (a first transmission signal from the first loss generator 3) in response to a level of the input signal like the gain adjuster 7 and the second gain adjuster 70. The first gain adjuster 71 is also configured to more increase a gain of the first gain adjuster 71 as a gain of the second gain adjuster 70 more increases.

For example, in case an outgoing signal obtained from a microphone (not shown) is transmitted on a second signal path 2, if the gain of the second gain adjuster 70 is increased, it is considered that a signal level of a sound obtained from the microphone is low. That is, it is estimated that a distance from the microphone and a speaker to a party would be comparatively long. Therefore, the first gain adjuster 71 increases the gain for amplifying an incoming signal transmitted on the first signal path 1 as seen from a side of a second terminal device T2, whereby the sound volume of an incoming signal from the speaker is increased and the party away from the speaker can easily hear the sound of the incoming signal.

Each of the voice switch VS1 to VS 5 in Embodiments 1 to 5 may be realized by running a hardware such as DSP (digital signal processor) or CPU by dedicated software. In this case, each of incoming and outgoing signals may be converted into a digital value through an A/D converter (not shown) to be signal-processed and then converted into an analog value through a D/A converter (not shown) to be output.

### (Embodiment 6)

A communication device and a communication system in accordance with Embodiment 6 of the invention will be explained in detail with reference to the drawings.

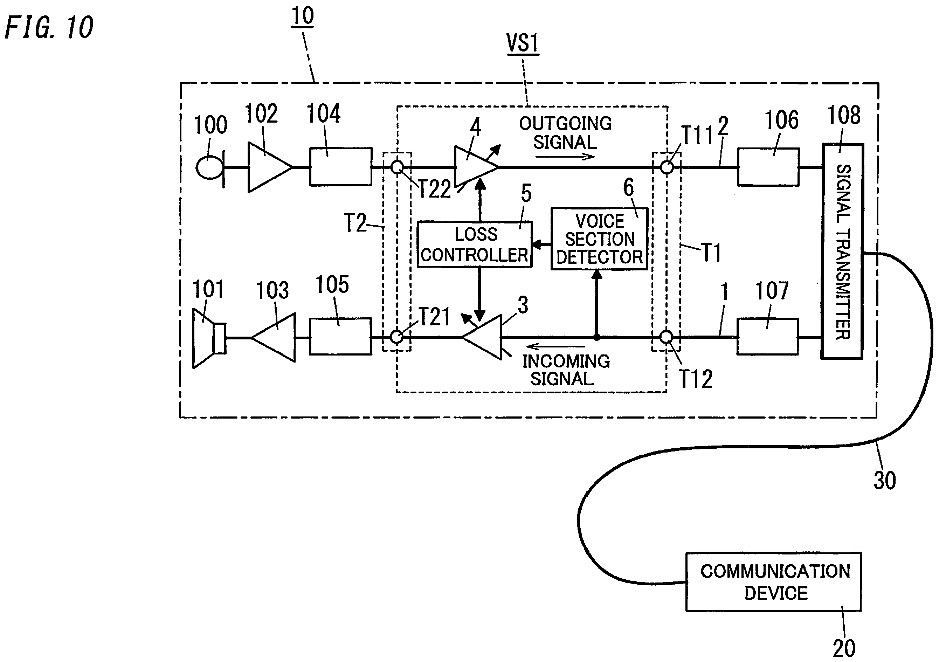

The communication system in the embodiment is composed of two communication devices 10 and 20 as shown in FIG. 10. The two communication devices 10 and 20 are connected via a transmission line 30 that is composed of metal wires, for example. Such a communication system is realized as, e.g. a home intercom system.

The communication device 10 in the embodiment includes a microphone 100, a speaker 101, a first amplifier 103, a second amplifier 102, an A/D converter 104, a D/A converter 105, the voice switch VS1, an encoder 106, a decoder 107 and a signal transmitter 108.

In the communication device 10 (a second communication device), the speaker 101 is connected to a side of a second input terminal T21 in a terminal device of a first signal path 1, namely a second terminal device T2, while the microphone 100 is connected to a side of a second output terminal T22 in the terminal device of a second signal path 2, namely the second terminal device T2. In the communication device 10, when seen from a side of the second terminal device T2, a first transmission signal to be transmitted on the first signal path 1 is an incoming signal, and a second transmission signal to be transmitted on the second signal path 2 is an outgoing signal.

An analog outgoing signal obtained from the microphone 100 is amplified through the second amplifier 102 and then converted into a digital outgoing signal through the A/D converter 104. The digital outgoing signal is processed with the voice switch VS1 and then reaches the encoder 106 via the second signal path 2 to be encoded.

The signal transmitter 108 digital-modulates the outgoing signal encoded through the encoder 106 (hereinafter referred to as a "transmission frame"), and transmits (sends) the modulated transmission frame to a communication device 20 (a first communication device) on an opposite party side via the transmission line 30.

The signal transmitter 108 receives and digital-demodulates a reception frame transmitted from the communication device 20 on the opposite party side via the transmission line 30 (a signal that is a transmission signal encoded and digital-modulated through the communication device 20 on the opposite party side), and outputs the encoded signal as an incoming signal.

The incoming signal from the signal transmitter 108 is decoded into a digital incoming signal through the decoder 107. The digital incoming signal is processed with the voice switch VS1, converted into an analog incoming signal through the D/A converter 105, amplified through the first amplifier 103, and then output to the speaker 101. The speaker 101 is driven according to the analog incoming signal to output incoming voice.

In an example, the communication device 20 on the opposite party side is in a quiet environment (an environment in which a background noise has a low level), or includes a sound transmitter and receiver such as a handset or a headset, while a party on the side of the second terminal device T2 is at a greater distance away from the communication device 10 in the embodiment (several meters away, for example).

In such a way, if a party on a side of a microphone is at a greater distance away from the microphone, a conventional voice switch is to detect both voice sections of incoming and outgoing signals as seen from the side of the microphone to change a communication state on the side of the microphone. This causes the reduction in detection accuracy of a voice section in the outgoing signal, thereby remaining in a reception state.

On the other hand, the communication device 10 in the embodiment includes the voice switch VS1 configured so that the communication device 10 is changed to a communication state that allows an incoming signal to be transmitted only while a voice section is detected from the incoming signal as seen from the side of the second terminal device T2 and so that the communication device 10 is changed to a communication state that allows an outgoing signal to be transmitted as seen from the side of the second terminal device T2 while no voice section is detected from the incoming signal. That is, the voice section detector 6 is not provided at a side of the microphone 100 and the speaker 101 (the side of the second terminal device T2) in the voice switch. As a result, while no voice of the opposite party is transmitted from the communication device 20 on the opposite party side, the voice switch VS1 is in the communication state that allows an outgoing signal to be transmitted, whereby voice of the party collected through the microphone 100 (outgoing voice) can be transmitted to the communication device 20 on the opposite party side. If voice of the opposite party is transmitted from the communication device 20 on the opposite party side, the voice switch VS1 changes the communication state to the state that allows an incoming signal to be transmitted, whereby the speaker 101 can output the voice of the opposite party (incoming voice).

If the communication device 10 in the embodiment is in an environment in which a background noise has a high level, the microphone 100 is to collect voice of which absolute or relative magnitude (an S/N ratio to a background noise) is small. In such a case, the conventional voice switch has a concern that it would not be changed in opposite directions. That is, when a background noise on a side of one communication device has a relatively high level, the conventional voice switch has a concern that the communication device will be still in a communication state that allows an outgoing signal to be transmitted.

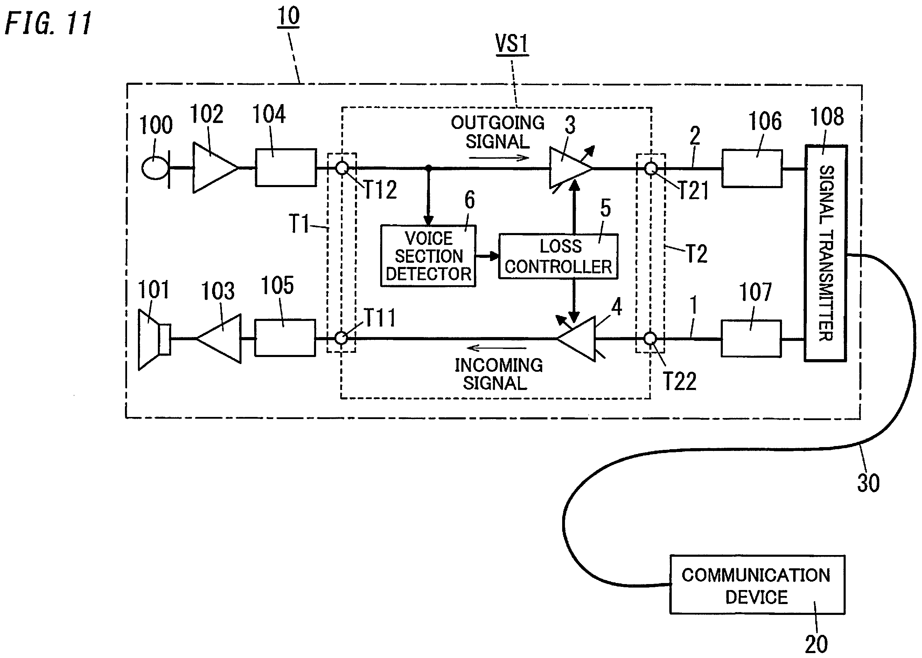

In such a case, as shown in FIG. 11, it is preferable that the voice switch VS1 be equipped for the communication device 10 so that outgoing and incoming signal as seen from the side of the first terminal device T1 are transmitted on the first and second signal paths 1 and 2, respectively. That is, the second terminal device T2 is disposed at a side of the aforementioned environment in which a background noise has a high level, and the voice section detector 6 is not provided at the side of the environment (the side of the second terminal device T2). In another example, a voice switch VS1 may be installed in the communication device 20.

In the communication device 10 shown in FIG. 11, the voice switch VS1 changes the communication state of the communication device 10 to the state that allows an outgoing signal to be transmitted only while a voice section is detected from the outgoing signal as seen from the side of the first terminal device T1, and changes the communication state to the state that allows an incoming signal to be transmitted when no voice section is detected from the outgoing signal. As a result, while no voice is collected through the microphone 100, the voice switch VS1 changes the communication state of the communication device 10 to the state that allows an incoming signal to be transmitted, whereby the speaker 101 can output the voice (incoming voice) of the opposite party from the communication device 20 of the opposite part side. If voice is collected through the microphone 100, the voice switch VS1 changes the communication state to the state that allows an outgoing signal to be transmitted, whereby the sound collected through the microphone 100 can be transmitted to the communication device 20 on the opposite party side.

The communication system in the embodiment is configured so that the two communication devices 10 and 20 perform wire-transmission via the transmission line 30, but may be configured so that they perform wireless-transmission via a communication medium such as radio wave, for example.

The communication device 10 in the embodiment may be provided with any one of the voice switches VS2 to VS5 in Embodiments 2 to 5 in place of the voice switch VS1 in Embodiment 1.

Embodiments of the invention are not limited to the voice switch. For example, embodiments of the invention may be a voice changing method and a program for the voice changing method.

An embodiment of the invention is a voice changing method for the voice switch VS1 that comprises the first signal path 1 configured so that a first transmission signal for the transmission of a voice signal is transmitted on, and the second signal path 2 configured so that a second transmission signal for the transmission of another voice signal different from the voice signal is transmitted on in the opposite direction to the first signal path 1. The voice changing method includes:
A) in a voice section containing a voice signal in the first transmission signal,
   allowing the first loss generator 3 configured to insert a loss into the first signal path 1 to decrease a first loss amount to be inserted into the first signal path 1, and
   allowing the second loss generator 4 configured to insert a loss into the second signal path 2 to increase a second loss amount to be inserted into the second transmission signal,
   thereby allowing the first transmission signal to be transmitted; and
B) in a section exclusive of the voice section,
   allowing the first loss amount to be increased, and
   allowing the second loss amount to be decreased,
   thereby allowing the second transmission signal to be transmitted.

An embodiment of the invention is a program for the voice switch VS1 that comprises
the first signal path 1 configured so that a first transmission signal for the transmission of a voice signal is transmitted on, and the second signal path 2 configured so that a second transmission signal for the transmission of another voice signal different from the voice signal is transmitted on in the opposite direction to the first signal path 1. The program allows a computer to function as a loss controller configured to
a) in a voice section containing a voice signal in the first transmission signal,
   allowing the first loss generator 3 configured to insert a loss into the first signal path 1 to decrease a first loss amount to be inserted into the first signal path 1, and
   allowing the second loss generator 4 configured to insert a loss into the second signal path 2 to increase a second loss amount to be inserted into the second transmission signal,
   thereby allowing the first transmission signal to be transmitted; and
B) in a section exclusive of the voice section,
   allowing the first loss amount to be increased, and
   allowing the second loss amount to be decreased,
   thereby allowing the second transmission signal to be transmitted.

The program may be stored in a memory of the computer in advance, be provided via an electrical communication line, or provided by a storage medium. In addition, the voice changing method and the program may be applied to any one of the voice switches VS1 to VS5 in Embodiments 1 to 5.

## Claims

1. A voice switch, comprising
a first signal path (1) configured so that a first transmission signal for transmission of a voice signal is transmitted on,
a second signal path (2) configured so that a second transmission signal for transmission of another voice signal different from the voice signal is transmitted on in an opposite direction to the first signal path (1),
a first loss generator (3) configured to insert a loss into the first signal path (1),
a second loss generator (4) configured to insert a loss into the second signal path (2),
a voice section detector (6) configured to detect voice sections (TV) containing the voice signal in the first transmission signal, and
a loss controller (5) configured to adjust a first loss amount to be inserted into the first signal path (1) through the first loss generator (3) and a second loss amount to be inserted into the second signal path (2) through the second loss generator (4), **characterised by** the loss controller (5) is configured to: in voice sections (TV) of the first transmission signal, increase the second loss amount and decrease the first loss amount, thereby allowing the first transmission signal to be transmitted; and in non-voice sections (TN) of the first transmission signal being sections of the first transmission signal comprising no voice signal, increase the first loss amount and decrease the second loss amount, thereby allowing the second transmission signal to be transmitted;
wherein the voice section detector (6) is configured to detect the voice sections (TV) based on the amplitude values of the first transmission signal; or by comparing a signal component of which correlation with the voice signal in the first transmission signal is relatively high and a signal component of which correlation with the voice signal is relatively low.

2. A voice switch of claim 1, wherein the loss controller (5) is configured to:
gradually increase the first loss amount and decrease the second loss amount, when a first transmission state that allows the first transmission signal to be transmitted is changed to a second transmission state that allows the second transmission signal to be transmitted; and
when the second transmission state is changed to the first transmission state, gradually decrease the first loss amount and increase the second loss amount, and make a transition time from the first transmission state to the second transmission state longer than a transition time from the second transmission state to the first transmission.

3. A voice switch of claim 1 or 2, further comprising a second gain adjuster (70) that is provided at a next stage of the second loss generator (4) in the second signal path (2) and configured to adjust a gain for the second transmission signal, the second gain adjuster (70) being configured to more increase the gain as the second transmission signal from the second loss generator (4) more decreases.

4. A voice switch of any one of claims 1 to 3, further comprising
a second voice section detector (60) configured to detect, in first transmission signal, the voice sections (TV) containing the voice signal and non-voice sections (TN) not containing the voice signal, and
a second gain adjuster (70) that is provided at a previous stage of the second loss generator (4) in the second signal path (2) and configured to adjust a gain for the second transmission signal, the second gain adjuster (70) being configured to: more increase the gain as the second transmission signal more decreases while no voice section is detected through the second voice section detector (60); and fix the gain to a prescribed value while the voice section (TV) is detected through the second voice section detector (60).

5. The voice switch of claim 4, wherein the voice section detector (6) is configured to double as the second voice section detector (60).

6. A voice switch of claim 4 or 5, wherein
the loss controller (5) comprises
a total loss adjuster (50) configured to adjust a total loss amount inserted into the first and second signal paths (1, 2), and
a loss distributor (51) configured to distribute the total loss amount to the first and second loss amounts in accordance with the total loss amount and a detection result of the voice section detector (6), wherein
the total loss adjuster (50) is configured to more increase the total loss amount as a gain of the second gain adjuster (70) more increases.

7. A voice switch of any one of claims 4 to 6, further comprising
a first gain adjuster (71) that is provided at a next stage of the first loss generator (3) in the first signal path (1) and configured to adjust a gain for the first transmission signal, the first gain adjuster (71) being configured to more increase the gain as a gain of the second gain adjuster (70) more increases.

8. A voice switch of any one of claims 1 to 7, further comprises
a first terminal device (T1) including a first input terminal (T11) and a first output terminal (T12), and
a second terminal device (T2) including a second input terminal (T21) and a second output terminal (T22), wherein
the first signal path (1) includes a signal path between the first output terminal (T12) and the second input terminal (T21),
the second signal path (2) includes a signal path between the second output terminal (T22) and the first input terminal (T11),
the first loss generator (3) comprises an input terminal and an output terminal electrically connected with the first output terminal (T12) and the second input terminal (T21), respectively,
the second loss generator (4) comprises an input terminal and an output terminal electrically connected with the second output terminal (T22) and the first input terminal (T11), respectively,
the voice switch includes only the voice section detector (6) and the voice section detector (6) is configured to detect the voice sections (TV) and non-voice sections (TN) in the first transmission signal of the first and second transmission signals only.

9. A voice switch of any one of claims 1 to 8, wherein the voice section detector (6) is configured to:
calculate first and second averages, the first average being an average of amplitude values of the first transmission signal in a first time period having a predetermined time length, the second average being an average of amplitude values of the first transmission signal in a second time period that starts prior to the first time period and includes the first time period; and
determine that the first time period corresponds to a voice section (TV) if a ratio of the first average to the second average is equal to or above a threshold.

10. A communication device (10), comprising
a voice switch of any one of claims 1 to 9,
a speaker (101) connected to the first signal path (1),
a microphone (100) connected to the second signal path (2) and
a signal transmitter (108) configured to transmit the first and second transmission signals.

11. A communication device (10), comprising
a voice switch of any one of claims 1 to 9,
a speaker (101) connected to the second signal path (2),
a microphone (100) connected to the first signal path (1) and
a signal transmitter (108) configured to transmit the first and second transmission signals.

12. A communication system, comprising
a communication device (10) of claim 10 or 11,
another communication device (20) on a side of an opposite party, which is configured to transmit and receive the first and second transmission signals with respect to the communication device (10) via a communication medium.

## Patentansprüche

1. Audioschalter, aufweisend:
einen ersten Signalpfad (1), der dafür ausgelegt ist, dass ein erstes Sendesignal zur Übertragung eines Stimmsignals darauf übertragen wird,
einen zweiten Signalpfad (2), der dafür ausgelegt ist, dass ein zweites Sendesignal zur Übertragung eines weiteren Stimmsignals, das sich von dem Stimmsignal unterscheidet, darauf in einer Richtung übertragen wird, die zu dem ersten Signalpfad (1) entgegengesetzt ist,
einen ersten Dämpfungsgenerator (3), der dazu eingerichtet ist, in den ersten Signalpfad (1) eine Dämpfung einzufügen,
einen zweiten Dämpfungsgenerator (4), der dazu eingerichtet ist, in den zweiten Signalpfad (2) eine Dämpfung einzufügen,
einen Stimmabschnittsdetektor (6), der dazu eingerichtet ist, Stimmabschnitte (TV), die das Stimmsignal enthalten, in dem ersten Sendesignal zu erfassen, und
eine Dämpfungssteuerungsvorrichtung (5), die dazu eingerichtet ist, einen ersten Dämpfungsbetrag, der über den ersten Dämpfungsgenerator (3) in den ersten Signalpfad (1) einzufügen ist, und einen zweiten Dämpfungsbetrag anzupassen, der durch den zweiten Dämpfungsgenerator (4) in den zweiten Signalpfad (2) einzufügen ist,
**dadurch gekennzeichnet dass**:
die Dämpfungssteuerungsvorrichtung (5) dazu eingerichtet ist: in Stimmabschnitten (TV) des ersten Sendesignals den zweiten Dämpfungsbetrag zu steigern und den ersten Dämpfungsbetrag zu verringern, so dass dadurch ermöglicht ist, das erste Sendesignal zu senden; und in Nicht-Stimmabschnitten (TN) des ersten Sendesignals, die Abschnitte des ersten Sendesignals sind, die kein Stimmsignal aufweisen, den ersten Dämpfungsbetrag zu steigern und den zweiten Dämpfungsbetrag zu verringern, so dass dadurch ermöglicht ist, das zweite Sendesignal zu senden;
wobei der Stimmabschnittsdetektor (6) dazu eingerichtet ist, die Stimmabschnitte (TV) auf der Grundlage der Amplitudenwerte des ersten Sendesignals; oder durch Vergleichen einer Signalkomponente, deren Korrelation mit dem Stimmsignal in dem ersten Sendesignal verhältnismäßig hoch ist, mit einer Signalkomponente, deren Korrelation mit dem Stimmsignal verhältnismäßig gering ist, zu erfassen.

2. Audioschalter nach Anspruch 1, wobei die Dämpfungssteuerungsvorrichtung (5) dazu eingerichtet ist:
den ersten Dämpfungsbetrag allmählich zu steigern und den zweiten Dämpfungsbetrag zu verringern, wenn ein erster Übertragungszustand, der eine Übertragung des ersten Sendesignals erlaubt, in einen zweiten Übertragungszustand überführt ist, der eine Übertragung des zweiten Sendesignals erlaubt; und
wenn der zweite Übertragungszustand in den ersten Übertragungszustand überführt ist, den ersten Dämpfungsbetrag allmählich zu verringern und den zweiten Dämpfungsbetrag zu steigern und zu veranlassen, dass eine Übergangszeit von dem ersten Übertragungszustand in den zweiten Übertragungszustand länger ist als eine Übergangszeit von dem zweiten Übertragungszustand in den ersten Übertragungszustand.

3. Audioschalter nach Anspruch 1 oder 2, ferner mit einem zweiten Verstärkungsregler (70), der bei einer nächsten Stufe des zweiten Dämpfungsgenerators (4) in dem zweiten Signalpfad (2) vorgesehen ist und dazu eingerichtet ist, einen Verstärkungsgrad für das zweite Sendesignal anzupassen, wobei der zweite Verstärkungsregler (70) dafür ausgelegt ist, den Verstärkungsgrad weiter zu steigern, während das zweite Sendesignal von dem zweiten Dämpfungsgenerator (4) weiter abnimmt.

4. Audioschalter nach einem beliebigen der Ansprüche 1 bis 3, ferner aufweisend:
einen zweiten Stimmabschnittsdetektor (60), der dazu eingerichtet ist, die Stimmabschnitte (TV), die das Stimmsignal enthalten, und Nicht-Stimmabschnitte (TN), die das Stimmsignal nicht enthalten, in dem ersten Sendesignal zu erfassen; und
einen zweiten Verstärkungsregler (70), der bei einer früheren Stufe des zweiten Dämpfungsgenerators (4) in dem zweiten Signalpfad (2) vorgesehen ist und dazu eingerichtet ist, einen Verstärkungsgrad für das zweite Sendesignal anzupassen, wobei der zweite Verstärkungsregler (70) dafür ausgelegt ist: den Verstärkungsgrad mit einer weiteren Abnahme des zweiten Sendesignals weiter zu steigern, während über den zweiten Stimmabschnittsdetektor (60) kein Stimmabschnitt erfasst wird; und den Verstärkungsgrad auf einen vorgegebenen Wert festzusetzen, während der Stimmabschnitt (TV) durch den zweiten Stimmabschnittsdetektor (60) erfasst wird.

5. Audioschalter nach Anspruch 4, wobei der Stimmabschnittsdetektor (6) dazu eingerichtet ist, als der zweite Stimmabschnittsdetektor (60) zu verdoppeln.

6. Audioschalter nach Anspruch 4 oder 5, wobei
die Dämpfungssteuerungsvorrichtung (5) aufweist:
einen Gesamtdämpfungsregler (50), der dazu eingerichtet ist, einen Gesamtdämpfungsbetrag anzupassen, der in den ersten und zweiten Signalpfad (1, 2) eingefügt ist, und
einen Dämpfungsverteiler (51), der dazu eingerichtet ist, den Gesamtdämpfungsbetrag in Abhängigkeit eines Gesamtdämpfungsbetrags und eines Erfassungsergebnisses des Stimmabschnittsdetektors (6) auf den ersten und zweiten Dämpfungsbetrag zu verteilen, wobei
der Gesamtdämpfungsregler (50) dazu eingerichtet ist, den Gesamtdämpfungsbetrag mit einer weiteren Zunahme eines Verstärkungsgrads des zweiten Verstärkungsreglers (70) weiter zu steigern.

7. Audioschalter nach einem beliebigen der Ansprüche 4 bis 6, ferner aufweisend:
einen ersten Verstärkungsregler (71), der bei einer nächsten Stufe des ersten Dämpfungsgenerators (3) in dem ersten Signalpfad (1) vorgesehen ist und dazu eingerichtet ist, für das erste Sendesignal einen Verstärkungsgrad anzupassen, wobei der erste Verstärkungsregler (71) dafür ausgelegt ist, den Verstärkungsgrad mit einer weiteren Zunahme eines Verstärkungsgrads des zweiten Verstärkungsreglers (70) weiter zu steigern.

8. Audioschalter nach einem beliebigen der Ansprüche 1 bis 7, ferner aufweisend:
eine erste Anschlussvorrichtung (T1) mit einem ersten Eingangsanschluss (T11) und einem ersten Ausgangsanschluss (T12), und
eine zweite Anschlussvorrichtung (T2) mit einem zweiten Eingangsanschluss (T21) und einem zweiten Ausgangsanschluss (T22), wobei
der erste Signalpfad (1) einen Signalpfad zwischen dem ersten Ausgangsanschluss (T12) und dem zweiten Eingangsanschluss (T21) beinhaltet,
der zweite Signalpfad (2) einen Signalpfad zwischen dem zweiten Ausgangsanschluss (T22) und dem ersten Eingangsanschluss (T11) beinhaltet,
der erste Dämpfungsgenerator (3) einen Eingangsanschluss und einen Ausgangsanschluss aufweist, die mit dem ersten Ausgangsanschluss (T12) bzw. dem zweiten Eingangsanschluss (T21) elektrisch verbunden sind,
der zweite Dämpfungsgenerator (4) einen Eingangsanschluss und einen Ausgangsanschluss aufweist, die mit dem zweiten Ausgangsanschluss (T22) bzw. dem ersten Eingangsanschluss (T11) elektrisch verbunden sind,
der Audioschalter lediglich den Stimmabschnittsdetektor (6) enthält, und der Stimmabschnittsdetektor (6) dazu eingerichtet ist, die Stimmabschnitte (TV) und Nicht-Stimmabschnitte (TN) lediglich in dem ersten Sendesignal von dem ersten und zweiten Sendesignal zu erfassen.

9. Audioschalter nach einem beliebigen der Ansprüche 1 bis 8, wobei der Stimmabschnittsdetektor (6) dazu eingerichtet ist:
einen ersten und zweiten Mittelwert zu berechnen, wobei der erste Mittelwert ein Mittelwert von Amplitudenwerten des ersten Sendesignals in einer ersten Zeitspanne ist, die eine vorbestimmte Zeitdauer aufweist, wobei der zweite Mittelwert ein Mittelwert von Amplitudenwerten des ersten Sendesignals in einer zweiten Zeitspanne ist, die vor der ersten Zeitspanne beginnt und die erste Zeitspanne einschließt; und
zu bestimmen, dass die erste Zeitspanne einem Stimmabschnitt (TV) entspricht, falls ein Verhältnis des ersten Mittelwerts zu dem zweiten Mittelwert gleich oder größer als ein Schwellwert ist.

10. Kommunikationsvorrichtung (10), aufweisend:
einen Audioschalter nach einem beliebigen der Ansprüche 1 bis 9,
einen Lautsprecher (101), der mit dem ersten Signalpfad (1) verbunden ist,
ein Mikrofon (100), das mit dem zweiten Signalpfad (2) verbunden ist, und
einen Signalgeber (108), der dazu eingerichtet ist, das erste und zweite Sendesignal zu senden.

11. Kommunikationsvorrichtung (10), aufweisend:
einen Audioschalter nach einem beliebigen der Ansprüche 1 bis 9,
einen Lautsprecher (101), der mit dem zweiten Signalpfad (2) verbunden ist,
ein Mikrofon (100), das mit dem ersten Signalpfad (1) verbunden ist, und
einen Signalgeber (108), der dazu eingerichtet ist, das erste und zweite Sendesignal zu senden.

12. Kommunikationssystem, aufweisend:
eine Kommunikationsvorrichtung (10) nach Anspruch 10 oder 11,
eine weitere Kommunikationsvorrichtung (20) auf einer Seite eines entgegengesetzten Teilnehmers, die dazu eingerichtet ist, das erste und zweite Sendesignal mit Bezug auf die Kommunikationsvorrichtung (10) über ein Kommunikationsmedium zu senden und zu empfangen.

## Revendications

1. Commutateur vocal, comprenant
un premier chemin de signal (1) configuré de telle sorte qu'un premier signal d'émission pour l'émission d'un signal vocal est émis sur celui-ci,
un second chemin de signal (2) configuré de telle sorte qu'un second signal d'émission pour l'émission d'un autre signal vocal différent du signal vocal est émis sur celui-ci dans une direction opposée à celle du premier chemin de signal (1),
un premier générateur de perte (3) configuré pour introduire une perte dans le premier chemin de signal (1),
un second générateur de perte (4) configuré pour introduire une perte dans le second chemin de signal (2),
un détecteur de partie vocale (6) configuré pour détecter des parties vocales (TV) contenant le signal vocal dans le premier signal d'émission, et
un régulateur de perte (5) configuré pour régler une première quantité de perte à introduire dans le premier chemin de signal (1) au travers du premier générateur de perte (3) et une seconde quantité de perte à introduire dans le second chemin de signal (2) au travers du second générateur de perte (4),
**caractérisé en ce que** le régulateur de perte (5) est configuré pour : dans les parties vocales (TV) du premier signal d'émission, augmenter la seconde quantité de perte et diminuer la première quantité de perte, afin de permettre l'émission du premier signal d'émission ; et dans les parties non vocales (TN) du premier signal d'émission, c'est-à-dire les parties du premier signal d'émission ne comprenant aucun signal vocal, augmenter la première quantité de perte et diminuer la seconde quantité de perte, afin de permettre l'émission du second signal d'émission ;
dans lequel le détecteur de partie vocale (6) est configuré pour détecter les parties vocales (TV) sur la base des valeurs d'amplitude du premier signal d'émission ; ou en comparant une composante de signal dont la corrélation avec le signal vocal du premier signal d'émission est relativement élevée et une composante de signal dont la corrélation avec le signal vocal est relativement faible.

2. Commutateur vocal selon la revendication 1, dans lequel le régulateur de perte (5) est configuré pour :
augmenter la première quantité de perte et diminuer la seconde quantité de perte de façon progressive, lorsqu'un premier état d'émission qui permet l'émission du premier signal d'émission passe à un second état d'émission qui permet l'émission du second signal d'émission ; et
lorsque le second état d'émission passe au premier état d'émission, diminuer la première quantité de perte et augmenter la seconde quantité de perte de façon progressive, et rendre un temps de passage du premier état d'émission au second état d'émission plus long qu'un temps de passage du second état d'émission à la première émission.

3. Commutateur vocal selon les revendications 1 ou 2, comprenant en outre un second module de réglage de gain (70) qui est prévu à un étage suivant du second générateur de perte (4) dans le second chemin de signal (2) et configuré pour régler un gain pour le second signal d'émission, le second module de réglage de gain (70) étant configuré pour continuer d'augmenter le gain au fur et à mesure que le second signal d'émission provenant du second générateur de perte (4) continue de diminuer.

4. Commutateur vocal selon l'une quelconque des revendications 1 à 3, comprenant en outre
un second détecteur de partie vocale (6) configuré pour détecter, dans un premier signal d'émission, les parties vocales (TV) contenant le signal vocal et les parties non vocales (TN) ne contenant pas le signal vocal, et
un second module de réglage de gain (70) qui est prévu à un étage précédent du second générateur de perte (4) dans le second chemin de signal (2) et configuré pour régler un gain pour le second signal d'émission, le second module de réglage de gain (70) étant configuré pour : continuer d'augmenter le gain au fur et à mesure que le second signal d'émission continue de diminuer pendant qu'aucune partie vocale n'est détecté par le second détecteur de partie vocale (60) ; et fixer le gain à une valeur prescrite pendant que la partie vocale (TV) est détectée par le second détecteur de partie vocale (60).

5. Commutateur vocal selon la revendication 4, dans lequel le détecteur de partie vocale (6) est configuré pour servir également de second détecteur de partie vocale (60).

6. Commutateur vocal selon les revendications 4 ou 5, dans lequel
le régulateur de perte (5) comprend
un module de réglage de perte totale (50) configuré pour régler une quantité totale de perte introduite dans les premier et second chemins de signal (1, 2), et
un module de répartition de perte (51) configuré pour répartir la quantité totale de perte entre les première et seconde quantités de perte en fonction de la quantité totale de perte et d'un résultat de détection du détecteur de partie vocale (6), dans lequel
le module de réglage de perte totale (50) est configuré pour continuer d'augmenter la quantité totale de perte au fur et à mesure qu'un gain du second module de réglage de gain (70) continue d'augmenter.

7. Commutateur vocal selon l'une quelconque des revendications 4 à 6, comprenant en outre
un premier module de réglage de gain (71) qui est prévu à un étage suivant du premier générateur de perte (3) dans le premier chemin de signal (1) et configuré pour régler un gain pour le premier signal d'émission, le premier module de réglage de gain (71) étant configuré pour continuer d'augmenter le gain au fur et à mesure qu'un gain du second module de réglage de gain (70) continue d'augmenter.

8. Commutateur vocal selon l'une quelconque des revendications 1 à 7, comprenant en outre
un premier dispositif terminal (T₁) incluant une première borne d'entrée (T11) et une première borne de sortie (T₁₂), et
un second dispositif terminal (T₂) incluant une seconde borne d'entrée (T₂₁) et une seconde borne de sortie (T₂₂), dans lequel
le premier chemin de signal (1) inclut un chemin de signal entre la première borne de sortie (T12) et la seconde borne d'entrée (T₂₁),
le second chemin de signal (2) inclut un chemin de signal entre la seconde borne de sortie (T22) et la première borne d'entrée (T₁₁),
le premier générateur de perte (3) comprend une borne d'entrée et une borne de sortie reliées électriquement à la première borne de sortie (T12) et à la seconde borne d'entrée (T₂₁), respectivement,
le second générateur de perte (4) comprend une borne d'entrée et une borne de sortie reliées électriquement à la seconde borne de sortie (T22) et à la première borne d'entrée (T₁₁), respectivement,
le commutateur vocal inclut uniquement le détecteur de partie vocale (6) et le détecteur de partie vocale (6) est configuré pour détecter les parties vocales (TV) et les parties non vocales (TN) uniquement dans le premier signal d'émission des premier et second signaux d'émission.

9. Commutateur vocal selon l'une quelconque des revendications 1 à 8, dans lequel le détecteur de partie vocale (6) est configuré pour :
calculer des première et seconde moyennes, la première moyenne étant une moyenne des valeurs d'amplitude du premier signal d'émission dans une première période ayant une durée prédéterminée, la seconde moyenne étant une moyenne des valeurs d'amplitude du premier signal d'émission dans une seconde période qui commence avant la première période et inclut la première période ; et
déterminer que la première période correspond à une partie vocale (TV) si un rapport de la première moyenne à la seconde moyenne est égal ou supérieur à un seuil.

10. Dispositif de communication (10), comprenant
un commutateur vocal selon l'une quelconque des revendications 1 à 9,
un haut-parleur (101) relié au premier chemin de signal (1),
un microphone (100) relié au second chemin de signal (2) et
un émetteur de signaux (108) configuré pour émettre les premier et second signaux d'émission.

11. Dispositif de communication (10), comprenant
un commutateur vocal selon l'une quelconque des revendications 1 à 9,
un haut-parleur (101) relié au second chemin de signal (2),
un microphone (100) relié au premier chemin de signal (1) et
un émetteur de signaux (108) configuré pour émettre les premier et second signaux d'émission.

12. Système de communication, comprenant
un dispositif de communication (10) selon les revendications 10 ou 11,
un autre dispositif de communication (20) du côté d'une partie opposée, qui est configuré pour émettre et recevoir les premier et second signaux d'émission en liaison avec le dispositif de communication (10) par l'intermédiaire d'un support de communication.
